Europäisches Patentamt

European Patent Office

Office européen des brevets

(19)

(11) Veröffentlichungsnummer: **0 286 705 B1**

# (12) EUROPÄISCHE PATENTSCHRIFT

(45) Veröffentlichungstag der Patentschrift: **10.07.91**

(51) Int. Cl.⁵: **F24F 13/08**

(21) Anmeldenummer: **87105565.3**

(22) Anmeldetag: **15.04.87**

(54) **Entlüftungs- und Abgasführungsanordnung.**

(43) Veröffentlichungstag der Anmeldung:
**19.10.88 Patentblatt 88/42**

(45) Bekanntmachung des Hinweises auf die
Patenterteilung:
**10.07.91 Patentblatt 91/28**

(84) Benannte Vertragsstaaten:
**BE DE ES FR GB IT NL SE**

(56) Entgegenhaltungen:
**DE-U- 6 912 365**
**DE-U- 7 206 549**
**US-A- 2 681 000**

**Taschenbuch für Heizung und Klimatechnik**
**(Ausgabe 1979) Seiten 305-306**

(73) Patentinhaber: **ELECTROLUX SIEGEN GMBH**
**Welterstrasse 55-57**
**W-5900 Siegen 1(DE)**

(72) Erfinder: **Lorek, Manfred**
**Gläserstrasse 70**
**W-5900 Siegen(DE)**

(74) Vertreter: **Patentanwälte Kirschner & Grosse**
**Forstenrieder Allee 59**
**W-8000 München 71(DE)**

## Beschreibung

Die Erfindung betrifft eine Entlüftungs- und Abgasführungsanordnung bei unter Verwendung von Kochern betriebenen Kühlgeräten, insbesondere Absorptionskühlaggregaten in Wohnwagen, Motorhomes und dergleichen.

Zur Belüftung solcher Absorptions-Kälteaggregate ist es bekannt, ein unteres Lüftungsgitter vorzusehen, über das dem mittels eines Kochers betriebenen Kälteaggregat frische Außenluft zugeführt wird. Die aufgewärmte Abluft des Aggregats sowie Verlustwärme des Kochers werden über ein oberes Lüftungsgitter abgeführt. Weiterhin werden die Abgase des Kochers über einen Abgaskamin in einer vom Lüftungsgitter getrennten Abgasführung nach außen geleitet. Dem entsprechend sind für die Be- und Entlüftung des Absorptionskälteaggregats und das Abführen der Abgase des Kochers mehrere getrennte Bauteile vorgesehen, die in je einer in der Seitenwand des Wohnwagens oder dergleichen herzustellenden Öffnung zu montieren sind. Bei unterschiedlichen Aggregattypen sind die Lage und der Anschluß der Lüftungs- und Abgasleitungen und - öffnungen aufeinander abzustimmen, was eine aufwendige Lagerhaltung und eine zeitaufwendige Montage bedingt.

Durch die DE-U-69 12 365 ist eine Vorrichtung zum Entlüften von Räumen bekannt geworden, welche zum Einbau an senkrechten Wänden geeignet und derart ausgebildet ist, daß die Richtung der Abluft bzw. Abgasströmung in nahezu gleichbleibendem aufsteigendem Winkel erfolgt und daß das Regen- bzw. Spritzwasser mit Sicherheit innerhalb der Vorrichtung abgefangen und nach außen geleitet wird. Dazu ist vorgesehen, daß ein Einbaurahmen als ein in Strömungsrichtung sich erweiternder Kanal ausgebildet ist, der nach außen durch einen mit Aus- und Eintrittsöffnungen für die Ab- bzw. Frischluft versehenen kaminartigen senkrechten Schacht abgeschlossen ist. Beim Austreten der Abgase in den Kamin saugen die aufsteigenden heißen Abgase frische Umgebungsluft durch das untere Ende des Kamins an und treten mit dieser Luft in vermischtem Zustand am oberen Ende des Kamins aus. Durch die vorgenannte Druckschrift wird daher eine an sich bekannte Ausgestaltung von Abgasführungs/ Abgaskaminkombinationen beschrieben. Die bei einem Kühlaggregat auftretende Problematik der gleichzeitigen Abführung erwärmter Abluft und Verlustwärme einerseits und bei der Verwendung von Kochern auftretenden Abgasen andererseits ist in der Druckschrift nicht angesprochen.

Der Erfindung liegt daher die Aufgabe zugrunde, die bekannten Entlüftungs- und Abgasführungsanordnungen der gattungsgemäßen Art zu vereinfachen und in ihrer Wirkungsweise zu verbessern, wobei der Problematik der gleichzeitigen Abführung von erwärmter Abluft und Verlustwärme des Kühlaggregates sowie der Ableitung der Abgase des Kochers Rechnung getragen und ferner eine Verwendbarkeit für unterschiedliche Aggregattypen ermöglicht werden soll.

Diese Aufgabe wird gemäß der Erfindung im wesentlichen dadurch gelöst, daß ein Lüftungsgitter für die Ableitung der erwärmten Abluft und der Verlustwärme des Kühlaggregates und eine hiervon separate Führungsvorrichtung für die Ableitung der Abgase des Kochers zu einer baulichen Einheit verbunden sind. Abgesehen davon, daß gemäß der Erfindung als Entlüftungsgitter und Führungsvorrichtung für die Ableitung der Abgase des Kochers nur noch ein einziges Bauteil erforderlich ist, was sowohl die Herstellungskosten als auch die Lagerhaltungskosten usw. reduziert, muß in der Seitenwand des Wohnwagens auch nur eine einzige Öffnung hergestellt werden und in dieser Öffnung ein einziges Teil montiert werden, was die Einbaukosten erheblich vermindert. Die bauliche Einheit, bestehend aus den in ihrer Funktion separaten Vorrichtungen, nämlich Entlüftungsgitter einerseits und separate Führungsvorrichtung für die Ableitung der Abgase des Kochers andererseits ermöglicht, daß nebeneinander die erwärmte Abluft und die Verlustwärme des Kühlaggregates ebenso wie die Abgase des Kochers gleichzeitig aus dem Wohnwagen abgeleitet werden. Die Frischluftzufuhr in den Wohnwagen ist in an sich bekannter Weise im unteren Bereich des Wohnwagens an einer von der Entlüftungs- und Abgasführungsanordnung weit entfernten Stelle angeordnet, so daß eine Rückführung der nach außen abgeleiteten erwärmten Abluft und Verlustwärme des Kühlaggregates ebenso wie eine Rückführung der Abgase des Kochers ausgeschlossen sind.

In weiterer Ausgestaltung der Erfindung ist vorgesehen, daß die Abgasführung ein kastenartiges Gehäuse umfaßt, dessen nach innen weisende Wand eine Eintrittsöffnung zum Eintritt der Abgase in das Gehäuse und dessen nach außen weisende Wand Öffnungen für den Austritt der Abgase aus dem Gehäuse aufweist. Wenn weiterhin in besonders vorteilhafter Weise die nach außen weisende Wand mindestens eine untere Öffnung zum Eintritt von Frischluft und mindestens eine obere Öffnung zum Austritt der Abgase und der Frischluft aufweist, so ergibt sich hierdurch ein besonders wirksames Entlüften der abzuführenden Abgase, nachdem das kastenartige Gehäuse durch die zwischen unteren und oberen Öffnungen zirkulierende Frischluft von abzuführenden Abgasen kontinuierlich freigespült wird.

Die Luftzirkulation durch das Gehäuse kann in zweckmäßiger Weise dadurch noch gefördert werden, daß die mindestens eine untere Öffnung von mindestens einer horizontalen, nach außen unten geneigten Lamelle begrenzt ist und daß die mindestens eine obere Öffnung von mindestens einer horizontalen, nach außen oben geneigten Lamelle begrenzt ist. In der Praxis werden mehrere untere und obere, durch geneigte Lamellen begrenzte schlitzförmige Öffnungen vorzusehen sein. Eine besonders effektive Luftzirkulation ergibt sich dann, wenn in weiterer Ausgestaltung der Erfindung ein mittlerer Bereich der nach außen weisenden Wand geschlossen ausgebildet ist.

Die Abgasführung umfaßt zweckmäßigerweise ein in das Gehäuse führendes Abgasrohr, an das der Abgaskamin des Kochers anschließbar ist. In bevorzugter Weiterbildung der Erfindung ist dieses Abgasrohr an einer in das Gehäuse einsetzbaren Trägerplatte befestigt, wobei die Außenabmessungen der Trägerplatte den Innenabmessungen des Gehäuses entsprechen können, so daß die Trägerplatte in vertikaler Richtung formschlüssig im Gehäuse parallel zur nach innen weisenden Wand des Gehäuses gehalten ist. Durch Austausch der Trägerplatte mit unterschiedlichen Abgasrohren kann die Abgasführung in einfacher Weise an das jeweils verwendete Gerät angepaßt werden.

Wenn gemäß einem weiteren bevorzugten Merkmal der Erfindung der an der nach innen weisenden Wand des Gehäuses vorgesehene Durchbruch für das Abgasrohr Abmessungen aufweist, die größer sind als der Außenquerschnitt des sich durch diesen Durchbruch hindurch erstreckenden Abgasrohrs, so ergeben sich hierdurch weitere Variationsmöglichkeiten hinsichtlich des Anschlusses des jeweiligen Abgaskamins.

Insbesondere kann gemäß einem weiteren Merkmal der Erfindung die Breite der Trägerplatte der lichten Breite des Gehäuses entsprechen und die Länge der Trägerplatte kann kleiner sein als die lichte Höhe des Gehäuses. Hierdurch läßt sich die Trägerplatte samt hieran befestigtem Abgasrohr in gewissem Umfang in vertikaler Richtung nach oben oder unten verschieben, wodurch die Lage des Abgasrohrs der jeweiligen Höhenlage des hieran anzuschließenden Abgaskamins in gewissem Rahmen angepaßt werden kann.

In bevorzugter Weiterbildung der Erfindung sind die Öffnungen für den Austritt der Abgase in einer am Gehäuse lösbar befestigten Frontplatte ausgebildet, welche am Gehäuse vorzugsweise verrastbar ist. Die Montage der erfindungsgemäßen Anordnung ist dann derart, daß zunächst bei abgenommener Frontplatte die Trägerplatte samt Abgasrohr von außen in das Gehäuse eingesetzt wird und anschließend die Außenseite des Gehäuses mittels der Frontplatte verschlossen wird.

Vorzugsweise ist die Frontplatte beidseitig mit sich senkrecht hierzu erstreckenden Seitenstegen zur Führung und Abstützung der Frontplatte am Gehäuse versehen, wobei in konstruktiv besonders einfacher Weise die Seitenstege der Frontplatte im eingesetzten Zustand der Frontplatte die Trägerplatte zwischen sich und der nach innen weisenden Wand des Gehäuses halten. Eine eigene Halteeinrichtung für die Trägerplatte erübrigt sich bei dieser Konstruktion.

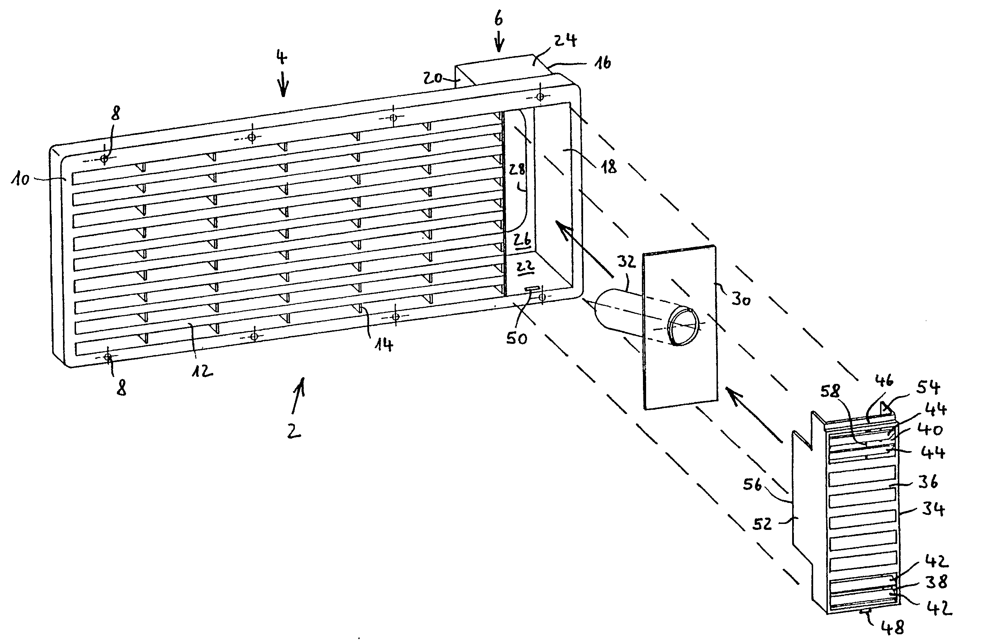

Im folgenden wird ein bevorzugtes Ausführungsbeispiel der Erfindung anhand der Zeichnung näher beschrieben. Die einzige Figur der Zeichnung zeigt die erfindungsgemäße Anordnung des Lüftungsgitters mit integrierter Abgasführung in perspektivischer Explosionsdarstellung.

Die in der Figur dargestellte Lüftungseinheit ist insgesamt mit der Bezugsziffer 2 bezeichnet und umfaßt ein Entlüftungsgitter 4 und eine Abgasführung 6. Die Lüftungseinheit 2 ist in einem Durchbruch einer Seitenwand eines nicht dargestellten Wohnwagens über die Bohrungen 8 festgeschraubt und im wesentlichen oberhalb eines Kochers eines Absorptions-Kälteaggregats angeordnet. Ein weiteres dem Entlüftungsgitter 4 ähnliches Belüftungsgitter (nicht dargestellt) ist in der Seitenwand des Wohnwagens unterhalb des Kochers eingebaut und führt über ein geeignetes Kanalsystem dem Kocher Frischluft und dem Absorptions-Kälteaggregat Kühlluft zu. Die Verlustwärme des Kochers sowie die erwärmte Abluft des Kälteaggregats werden über ein ebenfalls nicht dargestelltes Kanalsystem dem Entlüftungsgitter 4 zugeführt, durch das die Abluft nach außen abgeführt wird. Die Abgase des gasbetriebenen Kochers werden über einen ebenfalls nicht dargestellten Abgaskamin der Abgasführung 6 zugeführt und von hier, getrennt von der durch da s Entlüftungsgitter 4 austretenden Abluft, nach außen abgeführt.

Die Lüftungseinheit 2 umfaßt einen rechteckigen Rahmen 10, welcher in seinem linken, größten Bereich mit einer Gitterstruktur versehen ist, die aus horizontalen Lamellen 12 und vertikalen, zwischen den Lamellen 12 angeordneten Stützelementen 14 besteht. Die Lamellen 12 können gegebenenfalls leicht nach außen unten geneigt sein.

Im rechten Endbereich der Lüftungseinheit 2 ist ein sich nach hinten, d. h. in Richtung in den Wohnwagen hinein, erstreckendes kastenförmiges Gehäuse 16 ausgebildet, welches in der gewählten Darstellung vorne, d. h. nach außen hin offen ist, zwei geschlossene, vertikale Seitenwände 18, 20, zwei geschlossene, horizontale Seitenwände 22, 24 und eine innenliegende Wand 26 aufweist. In der innenliegenden Wand 26 ist ein Durchbruch ausgebildet, der die Form eines Langlochs aufweist, dessen Längsachse sich in vertikaler Richtung erstreckt.

Soweit die Lüftungseinheit 2 bisher beschrieben ist, besteht sie aus einem einstückig gespritzten Kunststofformteil.

Eine Trägerplatte 30 ist durch die außenliegende offene Seite des Gehäuses 16 in das Gehäuse 16 in Anlage an die Gehäuserückwand 26 einsetzbar. Die Breite der Trägerplatte 30 entspricht der Breite des Gehäuses 16, während die Länge der Trägerplatte 30 kleiner ist als die Höhe des Gehäuses 16. Auf diese Weise kann die Trägerplatte 30 in in das Gehäuse 16 eingesetztem Zustand in vertikaler Richtung gegenüber der innenliegenden Rückwand 26 verschoben werden, wobei die Länge der Trägerplatte 30 und die Länge des langlochartigen Durchbruchs 28 jedoch derart aufeinander abgestimmt sind, daß in jeder möglichen Position der Trägerplatte 30 der Durchbruch 28 vollständig von der Trägerplatte 30 verschlossen ist.

An der Trägerplatte 30 ist in etwa mittig ein Rohrstutzen 32 befestigt, der sich in der gewählten Darstellung von der Trägerplatte 30 ausgehend nach hinten erstreckt. An den Rohrstutzen 32 ist der nicht dargestellte Abgaskamin des Kochers des Absorptions-Kälteaggregats anschließbar. Trägerplatte 30 und Rohrstutzen 32 bestehen aus Aluminium, wobei der Rohrstutzen 32 an der Trägerplatte 30 angeschweißt oder angepunktet ist.

Die außenliegende, offene Seite des Gehäuses 16 ist mittels einer Frontplatte 34 verschließbar. Die Frontplatte 34 weist einen mittleren, geschlossenen Bereich 36 auf sowie mehrere untere schlitzförmige Öffnungen 38 und mehrere obere schlitzförmige Öffnungen 40. Die unteren schlitzförmigen Öffnungen 38 sind durch horizontale Lamellen 42 begrenzt, welche nach außen unten geneigt sind, während die schlitzförmigen oberen Öffnungen 40 durch Lamellen 44 begrenzt sind, die nach außen oben geneigt sind.

Am oberen Ende der Frontplatte 34 ist eine zurückgesetzte Stufe 46 ausgebildet, über die die Frontplatte den Rahmen 10 im Bereich des Gehäuses 16 hintergreift. An der unteren Seite der Frontplatte 34 ist eine Rastnase 48 angeformt, welche in eine entsprechend geformte Rastvertiefung 50 an der unteren Seitenwand 22 des Gehäuses 16 einrasten kann. Die Stufe 46 im Zusammenwirken mit dem Rahmen 10 und die Rastnase 48 im Zusammenwirken mit der Rastvertiefung 50 ermöglichen ein lösbares Verrasten der Frontplatte 34 an der Abgasführung 6.

Seitlich der Frontplatte 34 sind rechtwinklig hierzu jeweils zwei vertikale Seitenstege 52, 54 angeformt, deren Abstand der Breite des Gehäuses 16 entspricht und die somit zum Halten und Führen der Frontplatte 34 am Gehäuse 16 dienen. Gleichzeitig weisen die Stege 52, 54 eine solche Breite auf, daß sie mit ihren vertikalen, freien Kanten 56, 58 im eingerasteten Zustand der Frontplatte 34 die Trägerplatte 30 in ihrer an der Wand 26 anliegenden Position halten.

Die an den Endbereichen der Seitenstege 52, 54 vorgesehenen Aussparungen dienen einerseits der Materialeinsparung und ermöglichen andererseits ein Einschwenken und Einrasten der Frontplatte 34 am Gehäuse 16, nachdem die Stufe 46 hinter den Rahmen 10 eingeführt wurde. Die Frontplatte 34 ist ebenfalls als einstückiges Kunststoffspritzteil ausgebildet.

Zum Zusammenbau der Abgasführung 6 muß lediglich die ausgewählte Trägerplatte 30 von außen in Pfeilrichtung in das Gehäuse 16 eingeführt werden und anschließend die Frontplatte 34 auf das Gehäuse aufgeklipst werden. Die exakte Höhenlage des Rohrstutzens 32 kann gegebenenfalls noch nachträglich bei verschlossenem Gehäuse 16 eingestellt werden, indem der durch den Durchbruch 28 hindurchragende Rohrstutzen 32 ergriffen und gemeinsam mit der Trägerplatte 30 in vertikaler Richtung verschoben wird.

BEZUGSZEICHENLISTE

| 2 | Lüftungseinheit |
|---|---|
| 4 | Entlüftungsgitter |
| 6 | Abgasführung |
| 8 | Bohrungen |
| 10 | Rahmen |
| 12 | Lamellen |
| 14 | Stützelemente |
| 16 | Gehäuse |
| 18 | Seitenwand |
| 20 | Seitenwand |
| 22 | Seitenwand |
| 24 | Seitenwand |
| 26 | innenliegende Wand |
| 28 | Durchbruch |
| 30 | Trägerplatte |
| 32 | Rohrstutzen |
| 34 | Frontplatte |
| 36 | geschlossener Bereich |
| 38 | Öffnungen |
| 40 | Öffnungen |
| 42 | Lamellen |
| 44 | Lamellen |
| 46 | Stufe |
| 48 | Rastnase |
| 50 | Rastvertiefung |
| 52 | Seitensteg |
| 54 | Seitensteg |
| 56 | Kante |
| 58 | Kante |

**Ansprüche**

1. Entlüftungs- und Abgasführungsanordnung bei unter Verwendung von Kochern betriebenen Kühlgeräten, insbesondere Absorptionskühlaggregaten in Wohnwagen, Motorhomes und dgl., **dadurch gekennzeichnet,** daß ein Entlüftungsgitter (4) für die Ableitung der erwärmten Abluft und der Verlustwärme des Kühlaggregates und eine hiervon separate Führungsvorrichtung (6) für die Ableitung der Abgase des Kochers zu einer baulichen Einheit (2) verbunden sind.

2. Anordnung nach Anspruch 1, **dadurch gekennzeichnet,** daß die Führungsvorrichtung für die Ableitung der Abgase des Kochers (6) ein kastenartiges Gehäuse (16) umfaßt, dessen in allgemeiner Strömungsrichtung des Abgases gesehen nach innen weisende Wand (26) eine Eintrittsöffnung (28) zum Eintritt der Abgase in das Gehäuse (16) und dessen nach außen weisende Wand (34) Öffnungen (40) für den Austritt der Abgase aus dem Gehäuse (16) aufweist.

3. Anordnung nach Anspruch 2, **dadurch gekennzeichnet,** daß die Führungsvorrichtung für die Ableitung der Abgase des Kochers (6) ein in das Gehäuse (16) führendes Abgasrohr (32) umfaßt.

4. Anordnung nach Anspruch 3, **dadurch gekennzeichnet,** daß das Abgasrohr (32) an einer in das Gehäuse (16) einsetzbaren Trägerplatte (30) befestigt ist.

5. Anordnung nach Anspruch 4, **dadurch gekennzeichnet,** daß die Außenabmessungen der Trägerplatte (30) den Innenabmessungen des Gehäuses (16) entsprechen.

6. Anordnung nach Anspruch 4, **dadurch gekennzeichnet,** daß die Breite der Trägerplatte (30) der lichten Breite des Gehäuses (16) entspricht und daß die Länge der Trägerplatte (30) kleiner ist als die lichte Höhe des Gehäuses (16).

7. Anordnung nach Anspruch 5 oder 6, **dadurch gekennzeichnet,** daß an der nach innen weisenden Wand (26) des Gehäuses (16) ein Durchbruch (28) vorgesehen ist, dessen Abmessungen größer sind als der Außenquerschnitt des sich durch diesen Durchbruch erstreckenden Abgasrohrs (32).

8. Anordnung nach einem der Ansprüche 2 bis 7, **dadurch gekennzeichnet,** daß die Öffnungen (40) für den Austritt der Abgase in einer am Gehäuse (16) lösbar befestigten Frontplatte (34) ausgebildet sind.

9. Anordnung nach Anspruch 8, **dadurch gekennzeichnet,** daß die Frontplatte (34) am Gehäuse (16) verrastbar ist.

10. Anordnung nach Anspruch 8 oder 9, **dadurch gekennzeichnet,** daß die Frontplatte (34) beidseitig mit sich senkrecht hierzu erstreckenden Seitenstegen (52, 54) zur Führung und Abstützung der Frontplatte (34) am Gehäuse (16) versehen ist.

11. Anordnung nach einem der Ansprüche 4 bis 7 und nach Anspruch 10, **dadurch gekennzeichnet,** daß die Seitenstege (52, 54) der Frontplatte (34) im eingesetzten Zustand der Frontplatte (34) die Trägerplatte (30) zwischen sich und der nach innen weisenden Wand (26) des Gehäuses (16) halten.

12. Anordnung nach einem der Ansprüche 2 bis 11, **dadurch gekennzeichnet,** daß die nach außen weisende Wand (34) mindestens eine untere Öffnung (38) zum Eintritt von Frischluft und mindestens eine obere Öffnung (40) zum Austritt der Abgase und der Frischluft aufweist.

13. Anordnung nach Anspruch 12, **dadurch gekennzeichnet,** daß die mindestens eine untere Öffnung (38) von mindestens einer horizontalen, nach außen geneigten Lamelle (42) begrenzt ist und daß die mindetens eine obere Öffnung (40) von mindestens einer horizontalen, nach außen oben geneigten Lamelle begrenzt ist.

14. Anordnung nach Anspruch 12 oder 13, **dadurch gekennzeichnet,** daß ein mittlerer Bereich (36) der nach außen weisenden Wand (34) geschlossen ausgebildet ist.

15. Anordnung nach einem der vorhergehenden Ansprüche, **dadurch gekennzeichnet,** daß die Führungsvorrichtung für die Ableitung der Abgase des Kochers (6) neben dem Entlüftungsgitter (4) angeordnet ist und die gleiche Bauhöhe wie diese aufweist.

**Claims**

1. Ventilation and exhaust gas device in cooling apparatus operated by using cookers, in particular absorption-type cooling units in caravans, motor homes and the like, **characterized in that** a ventilation grille (4) for diverting the heated exhaust air and leakage heat of the cooling unit and a guide means (6) for diverting the exhaust gases of the cooker are combined into a structural unit (2).

2. Device as defined in claim 1, **characterized**

in that the guide means (6) for diverting the exhaust gases of the cooker includes a box-shaped housing (16), the wall (26) facing the interior seen in common direction of flow of the exhaust gases, of which comprises an inlet opening (28) for allowing the exhaust gases to enter the housing (16) and the wall (34) facing the exterior, of which has openings (40) for allowing the exhaust gases to leave the housing (16).

3. Device as defined in claim 2, **characterized in that** the guide means (6) for diverting the exhaust gases of the cooker includes an exhaust pipe (32) leading into the housing (16).

4. Device as defined in claim 3, **characterized in that** the exhaust pipe (32) is fitted to a backing plate (30) insertable into the housing (16).

5. Device as defined in claim 4, **characterized in that** the outer dimensions of the backing plate (30) correspond to the inner dimensions of the housing (16).

6. Device as defined in claim 4, **characterized in that** the width of the backing plate (30) corresponds to the clear width of the housing (16) **and that** the length of the backing king plate (30) is less than the clear height of the housing (16).

7. Device as defined in claim 5 or 6, **characterized in that** a break-through (28) the dimensions of which are larger than the outer dimensions of the exhaust pipe (32) extending through said break-through is provided for at the wall (26) facing to the inside, of the housing

8. Device as defined in any of claims 2 to 7, **characterized in that** the openings (40) for the exit of the exhaust gases are formed in a front plate (34) releasably fastened to the housing (16).

9. Device as defined in claim 8, **characterized in that** the front plate (34) is lockable to the housing (16).

10. Device as defined in claim 8 or 9, **characterized in that** the front plate (34) is on both sides provided with lateral web elements (52, 54) extending in perpendicular direction thereto for guiding and supporting the front plate (34) at the housing (16).

11. Device as defined in any of claims 4 to 7 and in claim 10, **characterized in that** the lateral web elements (52, 54) of the front plate (34) in inserted condition of the front plate (34) hold the backing plate (30) between said front plate and the wall (26) facing the interior, of the housing (16).

12. Device as defined in any of claims 2 to 11, **characterized in that** the wall (34) facing the outside comprises at least one lower opening (38) for the entry of fresh air and at least one upper opening (40) for the exit of the exhaust gases and the fresh air.

13. Device as defined in claim 12, **characterized in that** said at least one lower opening (38) is limited by at least one horizontal lamella (42) directed to the outside and that said at least one upper opening (40) is limited by at least one horizontal lamella directed upwardly to the outside.

14. Device as defined in claim 12 or 13, **characterized in that** a central area (36) of the wall (34) facing the outside is formed in closed manner.

15. Device as defined in any of the preceding claims, **characterized in that** the guide means (6) for diverting the exhaust gases of the cooker is disposed beside the ventilation grille (4) and has the same structural height.

**Revendications**

1. Dispositif d'aération et de guidage des gaz de fumée dans des appareils réfrigérants opérés sous l'utilisation d'appareils de cuisson, notamment des agrégats-réfrigératuers à absorption dans des caravans, des domiciles motorisés etc., **caractérisé en ce qu'**une grille d'aération (4) pour le déversement des gaz de fumée échauffés et de la chaleur perdue du agrégat-réfrigérateur et un moyen de guidage (6) séparé de ladite pour déverser les gaz de fumée de l'appareil de cuisson sont engagés dans une unité structurelle (2).

2. Dispositif selon la revendication 1, **caractérisé en ce que** le moyen du guidage pour le déversement des gaz de fumée de l'appareil de cuisson (6) comporte un boîtier (16) en forme de caisse, la paroi duquel (26) montrant vers l'intérieur, vue en sens commun d'écoulement des gaz de fumée, comporte une ouverture d'entrée (28) pour l'admission des gaz de fumée dans le boîtier, et la paroi duquel (34) montrant vers l'extérieur comporte des ouvertures pour la sortie des gaz de fumée dans le boîtier (16).

3. Dispositif selon la revendication 2, **caractérisé en ce que** le moyen de guidage pour le déversement des gaz de fumée de l'appareil de cuisson (6) comporte un tube (32) de gaz de fumée, entrant dans le boîtier (16).

4. Dispositif selon la revendication 3, **caractérisé en ce que** le tube (32) de gaz de fumée est fixé à une plaque d'appui (30) à insérer dans le boîtier (16).

5. Dispositif selon la revendication 4, **caractérisé en ce que** les dimensions extérieures de la plaque d'appui (30) correspondent aux dimensions intérieures du boîtier (16).

6. Dispositif selon la revendication 4, **caractérisé en ce que** la largeur de la plaque d'appui (30) correspond à la largeur intérieure du boîtier (16) et que la longueur de la plaque d'appui (30) est plus courte que l'ouverture libre du boîtier (16).

7. Dispositif selon la revendication 5 ou 6, **caractérisé en ce que** à la paroi (26) montrant vers l'intérieur du boîtier (16) un percement (28) est prévu, les dimensions duquel sont plus grandes que les dimensions en coupe traversale extérieures du tube (32) de gaz de fumée s'étendant au travers de ce percement.

8. Dispositif selon l'une des revendications 2 à 7, **caractérisé en ce que** les ouvertures (40) pour la sortie des gaz de fumée sont formées dans une platine avant (34) fixé détachablement au boîtier (16).

9. Dispositif selon la revendication 8, **caractérisé en ce que** la platine avant (34) est enclencheable au boîtier (16).

10. Dispositif selon la revendication 8 ou 9, **caractérisé en ce que** la platine avant (34) est munie des deux côtés des talons latérals (52, 54) s'étendant perpendiculairement par rapport à celle-ci, pour le guidage et l'appui de la platine avant (34) au boîtier (16).

11. Dispositif selon l'une des revendications 4 à 7 et selon la revendication 10, **caractérisé en ce que** les talons latérals (52, 54) de la platine avant (34) en condition insérée de ladite supportent la plaque d'appui (30) êntre eux-mêmes et la paroi (26) du boîtier (16) montrant vers l'intérieur.

12. Dispositif selon l'une des revendications 2 à 11, **caractérisé en ce que** la paroi (34) montrant vers l'extérieur comporte au moins une ouverture (38) inférieure pour l'entrée d'air frais et au moins une ouverture supérieure (40) pour la sortie des gaz de fumée et de l'air frais.

13. Dispositif selon la revendication 12, **caractérisé en ce que** la au moins une ouverture inférieure (38) est limitée de au moins une lame (42) horizontale, inclinée vers l'extérieur, et que la au moins une ouverture supérieure (40) est limitée de au moins une lame horizontale, inclinée en haut vers l'exterieure.

14. Dispositif selon la revendication 12 ou 13, **caractérisé en ce qu'**une zone centrale (36) de la paroi (34) montrant vers l'extérieur est en forme fermée.

15. Dispositif selon l'une des revendications précédentes, **caractérisé en ce que** le moyen de guidage pour le déversement des gaz de fumée de l'appareil de cuisson (6) est disposé à côté de la grille d'aération et qu'il est de la même hauteur de construction.